# EUROPÄISCHE PATENTANMELDUNG

(11) **EP 3 428 752 A1**
(43) Veröffentlichungstag der Anmeldung: **16.01.2019**
(21) Anmeldenummer: 17180792.8
(22) Anmeldetag: 11.07.2017
(51) Int. Cl.: G05B 19/418

(54) **VERFAHREN UND STEUEREINHEIT ZUM INITIALISIEREN EINER FERTIGUNGSSTATION SOWIE FERTIGUNGSVERBUND**

(71) Anmelder: Siemens Aktiengesellschaft, 80333 München (DE)
(72) Erfinder: Müller, Andreas, 91083 Baiersdorf (DE); Tzatzarov, Mintcho, 90459 Nürnberg (DE)

(57) **Zusammenfassung**

Die Erfindung betrifft ein Verfahren zum Initialisieren einer Fertigungsstation (2) eines Fertigungsverbunds (4) zur Fertigung eines Produkts. Um eine verbesserte Austauschbarkeit der Fertigungsmittel (3) zu ermöglichen sind folgende Schritte vorgesehen:
- Erfassen von zumindest einem Arbeitsschritt, welcher durch die Fertigungsstation (2) zur Fertigung durchzuführen ist,
- Erfassen einer Fertigungsfähigkeit zumindest eines der Fertigungsstation (2) untergeordneten Fertigungsmittels (3),
- Ermitteln, ob eine Durchführbarkeit des zumindest einen Arbeitsschritts mittels der Fertigungsfähigkeit des zumindest einen Fertigungsmittels (3) gegeben ist,
- Ausgeben eines Signals, welches die Durchführbarkeit des zumindest einen Arbeitsschritts charakterisiert, zum Initialisieren der Fertigungsstation (2).

## Beschreibung

Die Erfindung betrifft ein Verfahren zum Initialisieren einer Fertigungsstation eines Fertigungsverbunds. Die Erfindung betrifft außerdem eine Steuereinheit und einen Fertigungsverbund.

Ein Fertigungsverbund kann mehrere Fertigungsstationen umfassen, welche jeweils unterschiedliche Arbeitsschritte bei der Fertigung eines Produkts ausführen. Hierzu kann jede der Fertigungsstationen eines oder mehrere Fertigungsmittel zum Ausführen der Arbeitsschritte umfassen. Beispiele für Fertigungsmittel sind Werkzeuge und/oder Sensoren.

Jede der Fertigungsstationen kann zumindest teilweise durch eine jeweilige Steuereinheit gesteuert werden. Dabei wird beispielsweise jedes der Fertigungsmittel direkt und explizit durch einen Programmcode gesteuert. Beispielsweise ist jedes Fertigungsmittel durch eine eindeutige Identifikationsnummer oder Hardware-Adresse charakterisiert. Wird das Fertigungsmittel durch ein ähnliches Fertigungsmittel mit anderer Identifikationsnummer oder Hardware-Adresse ersetzt, so kann der Programmcode eine Fehlermeldung ausgeben, obwohl die Fertigungsstation nach wie vor in der Lage wäre, die ihr zugeordneten Arbeitsschritte auszuführen. Dadurch ist bei einem Tausch des Fertigungsmittels häufig eine Anpassung oder Neuprogrammierung des Programmcodes nötig.

Der Fertigungsverbund kann durch eine zentrale Steuereinrichtung gesteuert werden. Beispielsweise steuert die zentrale Steuereinrichtung die Steuereinheiten der einzelnen Fertigungsstationen.

Es ist Aufgabe der vorliegenden Erfindung, eine verbesserte Austauschbarkeit von Fertigungsmitteln in einer Fertigungsstation zu ermöglichen. Damit kann zusätzlich eine verbesserte Austauschbarkeit von Fertigungsstationen in Fertigungsverbünden einhergehen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung beruht auf der Idee, dass Fertigungsmittel einer Fertigungsstation im Wesentlichen anhand ihrer Fertigungsfähigkeiten charakterisiert werden. Im Stand der Technik ist demgegenüber vorgesehen, dass die Fertigungsmittel anhand einer Identifikationsnummer und/oder einer Hardware-Adresse angesteuert werden. Die Fertigungsfähigkeiten der Fertigungsmittel kann mit erforderlichen Fertigungsfähigkeiten zum Durchführen eines oder mehrere Arbeitsschritte verglichen werden. Als Fertigungsfähigkeit kann die Möglichkeit eines Fertigungsmittels einen Arbeitsschritt zumindest teilweise durchzuführen bezeichnet werden. Somit ermöglicht die erfindungsgemäße Idee, dass erkannt werden kann, ob die Arbeitsschritte, welche einer Fertigungsstation zur Fertigung eines Produkts zugeordnet sind, mittels der der Fertigungsstation untergeordneten Fertigungsmittel möglich ist. Insbesondere gilt dies nach dem Tausch eines oder mehrerer Fertigungsmittel.

Ein erster Aspekt der Erfindung betrifft ein Verfahren zum Initialisieren einer Fertigungsstation eines Fertigungsverbunds zur Fertigung eines Produkts. Das Verfahren geht von folgenden Schritten aus:
- Erfassen von zumindest einem Arbeitsschritt, welcher durch die Fertigungsstation zur Fertigung durchzuführen ist,
- Erfassen einer Fertigungsfähigkeit zumindest eines der Fertigungsstation untergeordneten Fertigungsmittels,
- Ermitteln, ob eine Durchführbarkeit des zumindest einen Arbeitsschritts mittels der Fertigungsfähigkeit des zumindest einen Fertigungsmittels gegeben ist,
- Ausgeben eines Signals, welches die Durchführbarkeit des zumindest einen Arbeitsschritts charakterisiert, zum Initialisieren der Fertigungsstation.

Als Arbeitsschritte können sämtliche Tätigkeiten zur Fertigung des Produkts bezeichnet werden. Als Fertigungsfähigkeit kann die Fähigkeit eines der Fertigungsmittel einen Arbeitsschritt ganz oder teilweise durchzuführen oder zu ermöglichen bezeichnet werden. Alternativ bezeichnet Fertigungsfähigkeit die Fähigkeit eines der Fertigungsmittel produktiv an einem Arbeitsschritt zu partizipieren. Als Fertigungsmittel werden insbesondere Sensoren und/oder Werkzeuge der Fertigungsstation bezeichnet. Insbesondere sind die Fertigungsmittel zur Fertigung des Produkts ausgebildet. Beispielsweise weist jedes Fertigungsmittel eine oder mehrere Fertigungsfähigkeiten auf, um das Produkt zu fertigen. Das Fertigungsmittel gilt der Fertigungsstation insbesondere dann als untergeordnet, wenn es eine physische Einheit mit weiteren Fertigungsmittel in der Fertigungsstation bildet. Alternativ oder zusätzlich gilt das Fertigungsmittel als der Fertigungsstation untergeordnet, wenn seine Funktion zumindest teilweise durch eine Steuereinheit der Fertigungsstation gesteuert wird. Beispiele für Werkzeuge sind Greifer, Bohrer oder Förderbänder. Daraus folgen als Beispiele für die Fertigungsfähigkeiten Greifen, Bohren oder Fördern. Beispiele für Sensoren sind Kraftsensoren, Abstandssensoren oder Waagen. Daraus folgen als Beispiele für die Fertigungsfähigkeiten Messen einer Kraft, Messen eines Abstandes oder Wiegen einer Materialmenge. Fertigungsfähigkeiten im Sinne der vorliegenden Erfindung werden auch im Deutschen häufig mit dem Fachbegriff "Skill" bezeichnet.

Beim Ermitteln, ob die Durchführbarkeit des zumindest einen Fertigungsschritt mittels der Fertigungsfähigkeit des zumindest einen Fertigungsmittels gegeben ist, wird beispielsweise überprüft, ob mittels des Fertigungsmittels die Durchführung des Arbeitsschritts möglich ist. Beispielsweise wird überprüft, ob die der Fertigungsstation untergeordneten Fertigungsmittel die Fähigkeit aufweisen, den Arbeitsschritt durchzuführen. Insbesondere ist vorgesehen, dass durch die Fertigungsstation mehrere Arbeitsschritte durchgeführt werden. Diese mehreren Arbeitsschritte gelten als der Fertigungsstation zugeordnet. Mehrere Fertigungsmittel können die mehreren Arbeitsschritte anhand ihrer Fertigungsfähigkeiten ganz oder teilweise durchführen. In diesem Fall wird beispielsweise überprüft, ob die Gesamtheit der der Fertigungsstation untergeordneten Fertigungsmittel die vollständige Durchführung aller der Fertigungsstation zugeordneten Arbeitsschritte ermöglicht.

Wird die Durchführbarkeit des Arbeitsschritts oder der Arbeitsschritte erkannt, so kann beispielsweise ein solches Signal ausgegeben werden, welches die Einsatzfähigkeit der Fertigungsstation angibt. Wird die Durchführbarkeit des zumindest einen Arbeitsschritts nicht erkannt, so wird beispielsweise ein solches Signal ausgegeben, welches angibt, dass keine vollständige Einsatzfähigkeit der Fertigungsstation gegeben ist.

Beispielsweise ist vorgesehen, dass der zumindest eine Arbeitsschritt, welcher durch die Fertigungsstation durchzuführen ist, aus einem Programmcode erfasst wird. Beispielsweise ist der Programmcode in einer Speichereinheit der Fertigungsstation gespeichert. In der Steuereinheit kann der Programmcode zum Steuern der Fertigung des Produkts durch die Fertigungsstation ausgeführt werden. Beispielsweise ist durch den Programmcode der durch die Fertigungsstation durchzuführende zumindest eine Arbeitsschritt vorgegeben.

Eine Weiterbildung sieht vor, dass das zumindest eine Fertigungsmittel durch seine Fertigungsfähigkeit charakterisiert wird. Insbesondere wird das Fertigungsmittel in dem Programmcode durch seine Fertigungsfähigkeit charakterisiert. Auf diese Weise kann das Fertigungsmittel zielgerichtet anhand seiner Funktion angesteuert werden. Dies gilt insbesondere dann, wenn das Fertigungsmittel durch ein andersartiges Fertigungsmittel ausgetauscht wird, welches dieselbe Fertigungsfähigkeit bereitstellt.

Eine Weiterbildung sieht vor, dass die Fertigungsfähigkeit des zumindest einen Fertigungsmittels aus einem Speichermedium, insbesondere einem EEPROM, des zumindest einen Fertigungsmittels ausgelesen und/oder erfasst wird. Mit anderen Worten ist in dem Fertigungsmittel abgespeichert, welche Fertigungsfähigkeiten das Fertigungsmittel aufweist. Dies kann beispielsweise durch die Steuereinheit der Fertigungsstation aus dem Fertigungsmittel ausgelesen werden.

Eine Weiterbildung sieht vor, dass dem zumindest einen Fertigungsmittel in Abhängigkeit von seiner Fertigungsfähigkeit eine Hardware-Adresse zugewiesen wird und/oder dass das zumindest eine Fertigungsmittel in Abhängigkeit von seiner Fertigungsfähigkeit angesteuert wird. Insbesondere wird überprüft, ob das Fertigungsmittel durch seine Fertigungsfähigkeit dazu in der Lage ist, den Arbeitsschritt zumindest teilweise auszuführen. Abhängig von diesem Ergebnis kann das Fertigungsmittel zum Fertigen des Produkts angesteuert werden. In einem Beispiel ist vorgesehen, dass ein Fertigungsmittel mit einer bestimmten Fertigungsfähigkeit, beispielsweise Bohren, durch ein neues Fertigungsmittel mit derselben Fertigungsfähigkeit ausgetauscht wird. Auf Basis der Fertigungsfähigkeit kann das neue Fertigungsmittel auf dieselbe Weise angesteuert werden, wie das ursprüngliche Fertigungsmittel und/oder dem neuen Fertigungsmittel dieselbe Hardware-Adresse zugewiesen werden, wie dem ursprünglichen Fertigungsmittel.

Eine Weiterbildung sieht vor, dass die Fertigungsfähigkeit des zumindest einen Fertigungsmittels anhand einer Kennung des zumindest einen Fertigungsmittels aus einer zentralen Datenbankeinrichtung, in welcher zusätzlich die Fertigungsfähigkeit einer Vielzahl weiterer Fertigungsmittel speicherbar oder gespeichert sind, erfasst wird. Die Kennung wird aus dem Fertigungsmittel erfasst. Mit anderen Worten wird die Kennung des Fertigungsmittels erfasst. Beispielsweise weist die Kennung einen Produkttyp, eine genaues Modell und/oder eine Seriennummer des Fertigungsmittels aus. Somit kann das Fertigungsmittel anhand der Kennung identifiziert werden. In der zentralen Datenbankeinrichtung kann die die Fertigungsfähigkeit des Fertigungsmittels speicherbar oder gespeichert sein. Insbesondere ist in der zentralen Datenbankeinrichtung eine jeweilige Fertigungsfähigkeit einer Vielzahl von Fertigungsmittel speicherbar oder gespeichert. Anhand der Kennung kann die in der zentralen Datenbankeinrichtung gespeicherte Fertigungsfähigkeit für das Fertigungsmittel abgerufen werden.

Eine Weiterbildung sieht vor, dass aus der zentralen Datenbankeinrichtung außerdem ein Ansteuerungscode zum Ansteuern des zumindest einen Fertigungsmittels abgerufen wird. Der Ansteuerungscode kann in einer Softwarebibliothek beziehungsweise Programmbibliothek der zentralen Datenbankeinrichtung gespeichert sein. Durch den Ansteuerungscode kann der Programmcode der Steuereinheit an das Fertigungsmittel angepasst werden. Mit anderen Worten wird der Programmcode um den Ansteuerungscode derart erweitert, dass mittels des erweiterten Programmcodes das Fertigungsmittel zum Durchführen des zumindest einen Arbeitsschritts angesteuert werden kann. Auf diese Weise kann der Programmcode der Steuereinheit besonders einfach an neue Fertigungsmittel angepasst werden. Insbesondere wird beim Initialisieren anhand des Ansteuerungscodes der erweiterte Programmcode zum Durchführen des zumindest einen Arbeitsschritts erzeugt.

Eine Weiterbildung sieht vor, dass der zumindest eine Arbeitsschritt unabhängig von der Art des zumindest einen Fertigungsmittels vorgegeben ist. Insbesondere ist der zumindest eine Arbeitsschritt durch den Programmcode vorgegeben. In diesem Fall kann durch den Programmcode die Durchführung des zumindest einen Arbeitsschritts anhand der Fertigungsfähigkeit vorgegeben sein. Beispielsweise gibt der Programmcode vor auf welche Weise die Fertigungsfähigkeit einzusetzen ist, um den Arbeitsschritt durchzuführen. In diesem Fall kann der Programmcode durch den Ansteuerungscode besonders einfach zum Ansteuern des Fertigungsmittels angepasst werden.

Eine Weiterbildung sieht vor, dass die Fertigungsfähigkeit durch eine Grundfähigkeit sowie zumindest eine Nebengröße charakterisiert wird, wobei die Nebengröße einen Einsatzbereich für die Grundfähigkeit vorgibt. Beispielsweise wird durch die Grundfähigkeit eine Handlung vorgegeben. Zusätzlich kann durch Nebengröße eine Nebenbedingung für die Handlung vorgegeben werden. Beispielsweise gibt die Nebengröße eine physikalische Größe zum Einsetzen der Grundfähigkeit oder zum Durchführen der Handlung vor. Beispielsweise wird die Grundfähigkeit Fördern oder Bohren vorgegeben. Durch die Nebengröße kann beispielsweise eine Fördergeschwindigkeit oder eine Bohrtiefe beziehungsweise Bohrlochgröße vorgegeben werden.

Ein zweiter Aspekt der Erfindung betrifft eine Steuereinheit zum Initialisieren einer Fertigungsstation eines Fertigungsverbunds zur Fertigung eines Produkts, welche dazu ausgebildet ist, ein Verfahren nach einer der oben genannten Ausführungsformen durchzuführen.

Ein weiterer Aspekt der Erfindung betrifft einen Fertigungsverbund, mit
- mehreren Fertigungsstationen,
- einer Steuereinheit der oben genannten Art, und
- einer zentralen Steuereinrichtung, welche ausgebildet ist, ein jeweiliges Ergebnis des Initialisierens der mehreren Fertigungsstationen zu erfassen.

Vorteilhafte Ausführungsformen und zweckmäßige Weiterbildungen des erfindungsgemäßen Verfahrens gelten analog auch die erfindungsgemäße Steuereinheit sowie den erfindungsgemäßen Fertigungsverbund weiter. Aus Gründen der Knappheit sind die entsprechenden Ausführungsformen und Weiterbildungen der erfindungsgemäßen Steuereinheit und des erfindungsgemäßen Fertigungsverbunds daher an dieser Stelle nicht nochmals erläutert.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- FIG 1: in einem Blockdiagramm einen Fertigungsverbund mit mehreren Fertigungsstationen; und
- FIG 2: ein Ablaufdiagramm einer Ausführungsform des erfindungsgemäßen Verfahrens.

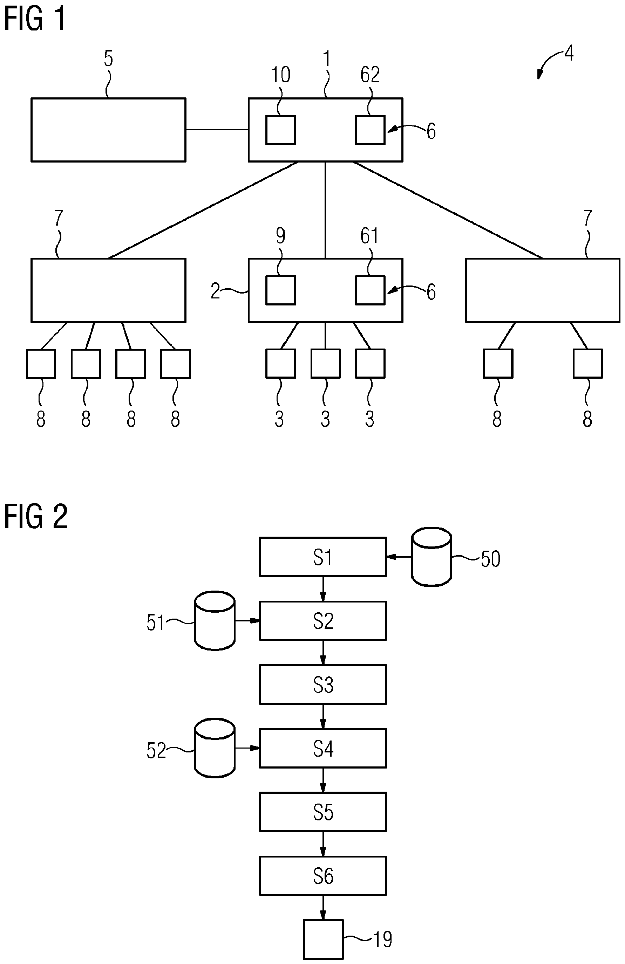

FIG 1 zeigt einen Fertigungsverbund 4 mit mehreren Fertigungsstationen 2, 7. Jeder der Fertigungsstationen 2, 7 sind vorliegend mehrere Fertigungsmittel 3, 8 untergeordnet. Der Fertigungsverbund 4 ist zur Fertigung eines Produkts ausgebildet. Beispielsweise dient der Fertigungsverbund 4 zur mechanischen Fertigung eines Werkstücks als das Produkt. Die Fertigung des Produkts kann in mehrere Teilschritte unterteilt sein. Jede der Fertigungsstationen 2, 7 kann zur Durchführung eines Teilschritts zur Fertigung des Produkts ausgebildet sein. Somit wird das Produkt in unterschiedlichen Fertigungsstadien von einer der Fertigungsstationen 2, 7 zur nächsten Fertigungsstation 2,7 übergeben. Jede der Fertigungsstationen 2, 7 kann zur Durchführung eines oder mehrerer Arbeitsschritte zur Fertigung des Produkts ausgebildet sein. Die Fertigungsstationen 7 sind mit einer zentralen Steuereinrichtung 1 des Fertigungsverbunds 4 verbunden. Die zentrale Steuereinrichtung 1 kann das Zusammenspiel der unterschiedlichen Fertigungsstationen 2, 7 Steuern. Im Folgenden wird die Funktion der Fertigungsstationen 2, 7 anhand der Fertigungsstation 2 beispielhaft beschrieben. Beispielsweise sind die Fertigungsstationen 7 ähnlich aufgebaut wie Fertigungsstation 2.

Die Fertigungsstation 2 ist mit der zentralen Steuereinrichtung 1 des Fertigungsverbunds 4 verbunden. Die Fertigungsmittel 3 sind der Fertigungsstation 2 untergeordnet. Das bedeutet, dass die Fertigungsmittel 3, insbesondere ausschließlich, dazu vorgesehen sind, Arbeitsschritte auszuführen, die der Fertigungsstation 2 zugeordnet sind. Bei den Fertigungsmitteln 3 kann es sich um Sensoren und/oder Werkzeuge handeln. Eines oder mehrere der Fertigungsmittel 3 kann/können als Werkzeug ausgebildet sein, beispielsweise als ein Förderband, als ein Greifer, als ein Bohrer oder als ein Schweißgerät. Eines oder mehrere der Fertigungsmittel 3 kann/können als Sensor ausgebildet sein, beispielsweise als Temperatursensor, Kraftsensor, Abstandssensor oder Waage. An dieser Stelle sei nochmals explizit darauf hingewiesen, dass jedes der Fertigungsmittel 3 als beliebiges Werkzeug oder beliebiger Sensor ausgeführt sein kann und die genannten Beispiele nicht abschließend zu verstehen sind.

Die Fertigungsmittel 3 weisen jeweilige, ihrer Art entsprechende Fertigungsfähigkeiten auf. Fertigungsfähigkeiten können beispielsweise sein: Fördern, Greifen, Bohren, Schweißen, Messen einer Temperatur oder Kraft, Messen eines Abstandes oder Gewichts. Auch diese Aufzählung ist keinesfalls abschließend zu verstehen. Die Fertigungsstation 2 kann anhand der Fertigungsmittel 3 in der Lage sein, ihr zugeordnete Arbeitsschritte zur Fertigung des Produkts abzuarbeiten. Die Fertigungsfähigkeiten können auch als "Skills" bezeichnet werden.

Die Fertigungsstation 2 kann eine Speichereinheit 9 aufweisen. In der Speichereinheit 9 kann ein Programmcode gespeichert sein, welcher der Fertigungsstation 2 Arbeitsschritte zur Fertigung des Produkts zuweist. Alternativ oder zusätzlich kann die zentrale Steuereinrichtung 1 eine Speichereinheit 10 aufweisen. In der Speichereinheit 10 kann alternativ oder zusätzlich ein Programmcode gespeichert sein, welche der Fertigungsstation 2 Arbeitsschritte zur Fertigung des Produkts zuweist.

Der Fertigungsverbund 4 umfasst eine Steuereinheit 6. Die Steuereinheit 6 kann vollständig in der zentralen Steuereinrichtung 1 oder vollständig in jeder der Fertigungsstationen 2, 7 verortet sein. Vorliegend ist die Steuereinheit 6 teilweise in der zentralen Steuereinrichtung 1 und teilweise in den Fertigungsstationen 2, 7 angeordnet (nur für Fertigungsstation 2 in FIG 1 gezeigt). Vorliegend ist ein erster Teil 61 der Steuereinheit 6 in der Fertigungsstation 2 und ein zweiter Teil 62 der Steuereinheit 6 in der zentralen Steuereinrichtung 1 angeordnet. Beim Initialisieren der Fertigungsstation 2 kann der erste Teil 61 der Steuereinheit 6 die Fertigungsfähigkeiten der der Fertigungsstation 2 zugeordneten Fertigungsmittel 3 erfassen. Beispielsweise kommt hierfür ein Verfahren gemäß FIG 2 infrage:
In einem Schritt S1 werden die der Fertigungsstation 2 zugeordneten Fertigungsmittel 3 erkannt beziehungsweise detektiert. Beispielsweise wird hierfür aus einer ersten Datenbank 50 abgerufen, auf welche Art und Weise die Fertigungsmittel 3 digital und/oder analog angesprochen werden können. Beispielsweise stellt die erste Datenbank 50 Informationen über hierfür nötige Protokolle bereit.

In einem Schritt S2 wird erfasst, welche Fertigungsfähigkeiten die Fertigungsmittel 3 bereitstellen. Insbesondere wird erfasst, welche Gesamtheit an Fertigungsfähigkeiten durch die Gesamtheit der Fertigungsmittel 3, welche der Fertigungsstation 2 untergeordnet sind, bereitgestellt werden. Diese Gesamtheit an Fertigungsfähigkeiten wird auch als Fertigungsfähigkeiten der Fertigungsstation 2 bezeichnet. Für den Schritt S2 können aus einer zweiten Datenbank 51 Informationen über die Fertigungsfähigkeiten der Fertigungsmittel 3 abgerufen werden. Beispielsweise umfasst jedes der Fertigungsmittel 3 eine eindeutige Kennung, wobei anhand der Kennung die zu dem Fertigungsmittel 3 zugehörigen Informationen aus der zweiten Datenbank 51 abgerufen werden können.

Insbesondere wird in dem Schritt S2 nicht die gesamte Fertigungsfähigkeit der Fertigungsmittel 3 erfasst, sondern nur eine jeweilige Grundfähigkeit, welche die Fertigungsfähigkeit abstrakt beschreibt. Beispielsweise betrifft die Grundfähigkeit Fördern, Greifen, Bohren, Schweißen, Messen einer Temperatur oder Kraft, Messen eines Abstandes oder Gewichts. Die jeweiligen Fertigungsfähigkeiten der Fertigungsmittel 3 werden später durch Konkretisierung der Grundfertigkeit durch eine Nebengröße ermittelt. Als Fertigungsfähigkeit können somit die konkretisierten Grundfähigkeiten bezeichnet werden. Aus diesem Grund können die Fertigungsfähigkeit auch als "concrete Skills" bezeichnet werden. Demgegenüber können die Grundfähigkeiten als "abstract Skills" bezeichnet werden. Die Nebengröße konkretisiert die Grundfähigkeit beispielsweise bezüglich eines Einsatzbereichs oder Wertebereichs.

In einem Schritt S3 wird überprüft, welche der Grundfähigkeiten oder "abstract Skills" durch die Gesamtheit der Fertigungsmittel 3 der Fertigungsstation 2 bereitgestellt werden.

In einem Schritt S4 können die Grundfähigkeiten, welche durch die Fertigungsstation 2 beziehungsweise die Fertigungsmittel 3 bereitgestellt werden können, anhand der Nebengrößen konkretisiert werden. Die Nebengrößen können aus einer dritten Datenbank 52 abgerufen werden. Insbesondere wird aus der dritten Datenbank 52 abgerufen, gemäß welcher Nebengrößen die Grundfähigkeiten bereitgestellt werden können. Insbesondere kann in dem Schritt S4 überprüft werden, im Rahmen welcher Nebengrößen die Grundfähigkeiten bereitgestellt werden können. Beispielsweise betrifft die Nebengröße eine Kraft zum Greifen, eine Geschwindigkeit zum Fördern, eine Kraft oder einen Lochdurchmesser zum Bohren oder einen Messbereich zum Messen einer Temperatur, eines Gewichts, eines Abstands oder einer Kraft.

Anhand der Grundfähigkeiten sowie der Nebengrößen kann in einem Schritt S5 erfasst werden, welche Fertigungsfähigkeiten durch die Fertigungsmittel 3 bereitgestellt werden. Beispielsweise werden in dem Schritt S5 die jeweiligen Grundfähigkeiten sowie die jeweiligen Nebengrößen jedes der Fertigungsmittel 3 zu den jeweiligen Fertigungsfähigkeiten jedes der Fertigungsmittel 3 zusammengesetzt.

In einem Schritt S6 wird ein Datensatz 19 erstellt, welche die Fertigungsfähigkeiten, welche durch die Fertigungsmittel 3 der Fertigungsstation 2 bereitgestellt werden, betrifft und/oder beschreibt. Der Datensatz 19 wird beispielsweise für die zentrale Steuereinheit 1 ausgegeben.

Die erste Datenbank 50, und/oder die zweite Datenbank 51 und/oder die dritte Datenbank 52 können durch eine Datenbankeinrichtung 5 bereitgestellt werden. Die Fertigungsstation 2 und/oder die zentrale Steuereinheit 1 können mit der Datenbankeinrichtung 5 zum Datenaustausch vernetzt sein.

Anhand des Datensatzes 19 kann überprüft werden, ob anhand der Fertigungsfähigkeiten der Fertigungsmittel 3 einer oder mehrere Arbeitsschritte welche der Fertigungsstation 2 zugeordnet sind, ausgeführt werden können. Der Arbeitsschritt beziehungsweise die Arbeitsschritte können beispielsweise aus dem Programmcode, welcher in der Speichereinheit 9 oder der Speichereinheit 10 gespeichert ist, erfasst werden. Insbesondere wird überprüft, ob für die Durchführung der Arbeitsschritte beziehungsweise des Arbeitsschritts notwendige Grundfähigkeiten bereitgestellt sind. Zusätzlich wird überprüft, ob die Grundfähigkeit entsprechend der Nebengröße für den Arbeitsschritt passen bereitgestellt werden kann. Insbesondere wird nur dann festgestellt, dass ein Arbeitsschritt durch eines der Fertigungsmittel 3 durchführbar ist, wenn die Grundfähigkeit entsprechend der Nebengröße bereitgestellt werden kann. Somit ist die Fertigungsfähigkeit zur Durchführung des Arbeitsschritts nur dann gegeben, wenn die Grundfähigkeit entsprechend der Nebengröße bereitgestellt werden kann.

In konkreten Beispielen werden Arbeitsschritte nur dann als durchführbar ermittelt, wenn ein Loch mit ausreichender Kraft und passendem Lochdurchmesser gebohrt werden kann, das Produkt mit einer vorgegebenen Kraft gegriffen werden kann, ein Förderband das Fördern mit einer vorgegebenen Geschwindigkeit ermöglicht oder eine Kraft oder eine Temperatur in einem vorgegebenen Wertebereich gemessen werden kann.

Abhängig davon ob die Arbeitsschritte durch die Fertigungsstation 2 durchführbar sind, kann ein Signal ausgegeben werden. Das Signal zeigt beispielsweise an, dass die Fertigungsstation 2 bereit für die Fertigung des Werkstücks ist, wenn alle Arbeitsschritte als durchführbar ermittelt wurden. Alternativ zeigt das Signal beispielsweise an, dass die Fertigungsstation 2 nicht bereit für die Fertigung des Werkstücks ist, wenn zumindest ein Arbeitsschritt als nicht durchführbar ermittelt wurde. Insbesondere ist die zentrale Steuereinrichtung 1 dazu ausgebildet, aus jeder der Fertigungsstationen 2, 7 zu erfassen, ob durch diese alle der jeweiligen Fertigungsstation 2, 7 zugeordneten Arbeitsschritte durchführbar sind. In diesem Fall kann der Fertigungsverbund 4 zur Fertigung des Produkts eingesetzt werden.

### Bezugszeichenliste

- 1: Steuereinheit
- 2: Fertigungsstation
- 3: Fertigungsmittel
- 4: Fertigungsverbund
- 5: Datenbankeinrichtung
- 6: Steuereinheit
- 7: Fertigungsstation
- 8: Fertigungsmittel
- 9: Speichereinheit
- 10: Speichereinheit
- 19: Datensatz
- 50: Datenbank
- 51: Datenbank
- 52: Datenbank
- 61: Teil
- 62: Teil
- S1...S6: Schritte des Verfahrens

## Patentansprüche

1. Verfahren zum Initialisieren einer Fertigungsstation (2) eines Fertigungsverbunds (4) zur Fertigung eines Produkts, mit den Schritten:
- Erfassen von zumindest einem Arbeitsschritt, welcher durch die Fertigungsstation (2) zur Fertigung durchzuführen ist,
- Erfassen einer Fertigungsfähigkeit zumindest eines der Fertigungsstation (2) untergeordneten Fertigungsmittels (3),
- Ermitteln, ob eine Durchführbarkeit des zumindest einen Arbeitsschritts mittels der Fertigungsfähigkeit des zumindest einen Fertigungsmittels (3) gegeben ist,
- Ausgeben eines Signals, welches die Durchführbarkeit des zumindest einen Arbeitsschritts charakterisiert, zum Initialisieren der Fertigungsstation (2).

2. Verfahren nach Anspruch 1, **dadurch gekennzeichnet, dass** der zumindest eine Arbeitsschritt, welcher durch die Fertigungsstation (2) durchzuführen ist, aus einem Programmcode erfasst wird.

3. Verfahren nach einem der vorhergehenden Ansprüche, **dadurch gekennzeichnet, dass** das zumindest eine Fertigungsmittel (3) durch seine Fertigungsfähigkeit charakterisiert wird.

4. Verfahren nach einem der vorhergehenden Ansprüche, **dadurch gekennzeichnet, dass** die Fertigungsfähigkeit des zumindest einen Fertigungsmittels (3) aus einem Speichermedium des zumindest einen Fertigungsmittels (3) ausgelesen wird.

5. Verfahren nach einem der vorhergehenden Ansprüche, **dadurch gekennzeichnet, dass** dem zumindest einen Fertigungsmittel (3) in Abhängigkeit von seiner Fertigungsfähigkeit eine Hardware-Adresse zugewiesen wird und/oder das zumindest eine Fertigungsmittel (3) in Abhängigkeit seiner Fertigungsfähigkeit angesteuert wird.

6. Verfahren nach einem der vorhergehenden Ansprüche, **dadurch gekennzeichnet, dass** die Fertigungsfähigkeit des zumindest einen Fertigungsmittels (3) anhand einer Kennung des zumindest einen Fertigungsmittels (23) aus einer zentralen Datenbankeinrichtung (5, 51, 52), in welcher zusätzlich die Fertigungsfähigkeit einer Vielzahl weiterer Fertigungsmittel (8) speicherbar oder gespeichert sind, erfasst wird.

7. Verfahren nach Anspruch 5 und 6, **dadurch gekennzeichnet, dass** aus der zentralen Datenbankeinrichtung (5, 50) außerdem ein Ansteuerungscode zum Ansteuern des zumindest einen Fertigungsmittels (3) abgerufen wird.

8. Verfahren nach einem der vorhergehenden Ansprüche, **dadurch gekennzeichnet, dass** der zumindest eine Arbeitsschritt unabhängig von der Art des zumindest einen Fertigungsmittels (3) vorgegeben ist.

9. Verfahren nach einem der vorhergehenden Ansprüche, **dadurch gekennzeichnet, dass** die Fertigungsfähigkeit durch eine Grundfähigkeit sowie zumindest eine Nebengröße charakterisiert wird, wobei die Nebengröße einen Einsatzbereich für die Grundfähigkeit vorgibt.

10. Steuereinheit (6) zum Initialisieren einer Fertigungsstation (2) eines Fertigungsverbunds (4) zur Fertigung eines Produkts, welche dazu ausgebildet ist, ein Verfahren nach einem der vorhergehenden Ansprüche durchzuführen.

11. Fertigungsverbund (4), mit
- mehreren Fertigungsstationen (2, 7),
- einer Steuereinheit (6) nach Anspruch 10, und
- einer zentralen Steuereinrichtung (1), welche ausgebildet ist, ein jeweiliges Ergebnis des Initialisierens der mehreren Fertigungsstationen (2, 7) zu erfassen.
